# EUROPÄISCHE PATENTSCHRIFT

(11) **EP 2 515 553 B1**
(45) Veröffentlichungstag und Bekanntmachung des Hinweises auf die Patenterteilung: **06.04.2016**
(21) Anmeldenummer: 12002734.7
(22) Anmeldetag: 19.04.2012
(51) Int. Cl.: H04Q 9/00, G08B 26/00

(54) **Sicherheits-Kommunikationssystem zur Signalisierung von Systemzuständen**
Security communication system for signalling system conditions
Système de communication de sécurité destiné à la signalisation d'états du système

(30) Priorität: 21.04.2011 DE 102011018630
(43) Veröffentlichungstag der Anmeldung: 24.10.2012
(73) Patentinhaber: Phoenix Contact GmbH & Co. KG, 32825 Blomberg (DE)
(72) Erfinder: Teutenberg, Jürgen, 59602 Rüthen (DE); Hüttemeier, Thomas, 32791 Lage (DE); Davis, Simon, 32816 Schieder Schmalenberg (DE)
(74) Vertreter: Kampfenkel, Klaus

(56) Entgegenhaltungen:
- EP-A1- 0 254 125
- EP-A2- 0 362 797
- DE-A1- 19 940 700
- DE-U1- 9 105 529

## Beschreibung

Die vorliegende Erfindung betrifft ein Sicherheits-Kommunikationssystem mit einer Auswerteeinheit und einer Anzahl in Reihe geschalteter Teilnehmer mit je einem Sensor sowie ein Verfahren zum Signalisieren von Systemzuständen.

Zur Abwendung von Gefahren für Menschen, Maschinen und Anlagen in der Automatisierungstechnik sind in der Regel Notausschalter und/oder andere Sensoren an entsprechenden Einrichtungen vorgesehen, mit denen die Maschinen oder Anlagen abgeschaltet und in einen sicheren Zustand versetzt werden können. Bei räumlich ausgedehnten Anlagen oder Automatisierungssystemen ist es zudem erforderlich, mehrere Sensoren, zum Beispiel Notausschalter, Temperatursensoren, Drucksensoren, Trittmatten, Lichtschranken und dergleichen bereitzustellen, um eine optimale Erreichbarkeit im Gefahrenfall zu gewährleisten.

EP 0 362 797 A2 beschreibt ein Verfahren zum energiesparenden Betrieb von Gefahrenmeldern in einer nach dem Betrieb der Kettensynchronisation arbeitenden Gefahrenmeldeanlage mit einer Zentrale mit mehreren zweiadrigen Meldeprimärleitungen, an die kettenförmig eine Vielzahl von Melder angeschlossen sind, die regelmäßig von der Zentrale aus zyklisch angesteuert und auf ihren jeweiligen analogen Meldermesswert abgefragt werden, wobei die Melder jeweils eine Spannungsmesseinrichtung zur Überwachung der angelegten Linienspannung, eine nachgeschaltete Verknüpfungslogik mit zugeordnetem Sensorteil, eine nachgeschaltete Steuereinrichtung, einen Energiespeicher und einen Durchschaltetransistor aufweisen. Die Verknüpfungslogik ist insbesondere von einem Mikrorechner gebildet, der zum Zweck der Energieeinsparung an- und abschaltbar ist, wobei der Mikrorechner in Abhängigkeit von bestimmten Schaltkriterien in einen stromsparenden Ruhezustand geschaltet und wiedereingeschaltet werden kann, wobei eine erforderliche Anlaufzeit für den Mikrorechner gewährleistet ist, zum Beispiel derart, dass mit einer zyklischen Abfrage der Reihe nach jeder Melder eine Anschaltspannung erhält, die den Mikrorechner einschaltet, aber erst nach einer vorgegebenen Anlaufzeit den betreffenden Melder aktiviert. Danach erfolgt der Datenverkehr mit der Zentrale, wobei für den Empfang jeweils eine bestimmte Empfangszeit und für das Antworten jeweils eine bestimmte Antwortzeit vorgesehen ist, und anschließend wird zum nächsten Melder durchgeschaltet, wobei mit dem Durchschalten zum nächsten Melder der Mikrorechner abgeschaltet wird. Die Datenübertragung zum Melder erfolgt durch Modulation der Linienspannung in der Zentrale, während eine Datenübertragung zur Zentrale durch die Modulation des Linienstroms im Melder vorgenommen wird. Als Energiespeicher weisen die Melder einen Kondensator auf, der im Ruhezustand beim Anliegen einer Ruhespannung aufgeladen wird.

Aus EP 0 254 125 A1 ist eine ähnliche Gefahrenmeldeanlage wie die in EP 0 362 797 A2 beschriebene bekannt, bei welcher zur schnelleren Alarmerkennung rasch aufeinanderfolgende Zustandsabfragezyklen ohne Ermittlung des Melderortes durchgeführt werden, und nur im Falle einer Zustandsänderung oder einem anderweitigen Bedarf ein regulärer Abfragezyklus durchgeführt werden, bei dem auch die Melderadresse ermittelt wird.

Der Erfindung liegt die Aufgabe zugrunde, ein Sicherheits-Kommunikationssystem sowie ein Verfahren bereitzustellen, mit denen ein Signal für einen kritischen Systemzustand, z.B. ein Notaussignal, zuverlässig signalisiert und die Quelle eines Signals eindeutig lokalisiert werden kann.

Zur Lösung dieser Aufgabe schlägt die vorliegende Erfindung ein Sicherheits-Kommunikationssystem zum Bereitstellen einer Sicherheitsfunktion vor, welches eine Auswerteeinheit umfasst, an welcher eine Anzahl von in Reihe geschalteten Teilnehmern angeschlossen ist.

Die Auswerteeinheit weist einen einzigen, bidirektionalen Signalanschluss, der zum Ausgeben und zum Empfangen von Signalen geeignet ist, einen Masseanschluss für ein Bezugspotential und eine Einrichtung zum Bereitstellen, d.h. zum Generieren eines vorbestimmten Signals für die Teilnehmer auf.

Die Teilnehmer weisen jeweils einen ersten und einen zweiten Teilnehmersignalanschluss, wenigstens einen Masseanschluss, über den das Bezugspotential bereitgestellt wird, sowie eine elektronische Schaltung auf, die mit einem Sensor in Verbindung steht. Jede elektronische Schaltung ist zum Modulieren des vorbestimmten Signals ausgebildet, um den Systemzustand zu signalisieren, welcher durch ein Sensorsignal des jeweiligen Sensors dargestellt wird. Die Modulation des vorbestimmten Signals durch einen jeweiligen Teilnehmer erfolgt an einer dem jeweiligen Teilnehmer zugeordneten Stelle im vorbestimmten Signal, d.h. zu einer vorbestimmten Stelle und für eine vorbestimmte Zeit. Die Modulation kann durch Ändern des Signalpegels erfolgen.

Die Auswerteeinheit ist zum Empfangen des modulierten vorbestimmten Signals ausgebildet, das mittels Mitlesens des bereitgestellten vorbestimmten Signals am Signalanschluss erfolgen kann. Ferner ist die Auswerteeinheit ausgebildet, das empfangene modulierte vorbestimmte Signal auszuwerten und unter Ansprechen auf das Auswerteergebnis eine Sicherheitsfunktion zu steuern.

Bei dem Sensor kann es sich zum Beispiel um einen Notausschalter, einen Temperatursensor, einen Drucksensor, eine Trittmatte, eine Lichtschranke und ein Schutzgitter handeln. Das Ausgangssignal eines Sensors zeigt einen kritischen oder einen unkritischen Systemzustand an. Ein kritischer Systemzustand führt dazu, dass die Auswerteeinheit eine Sicherheitsfunktion auslöst.

Vorteilhafter Weise wird das vorbestimmte Signal von den Teilnehmern derart moduliert, dass die Auswerteeinheit unter Ansprechen auf das modulierte vorbestimmte Signal den oder die diejenigen Teilnehmer lokalisieren kann, welche einen kritischen Systemzustand signalisiert haben.

Eine vorteilhafte Ausbildungsform sieht vor, dass die elektronische Schaltung jedes Teilnehmers einen Logikbaustein und wenigstens einen ersten Transistor umfasst, wobei der erste Transistor durch den Logikbaustein ansteuerbar ist. Der erste Transistor ist zwischen dem ersten Teilnehmersignalanschluss und einem Energiespeicher des Teilnehmers angeordnet und dazu ausgebildet, das am ersten Teilnehmersignalanschluss anliegende vorbestimmte Signal zu modulieren.

Die elektronische Schaltung kann einen zweiten Transistor umfassen, der durch den Logikbaustein ansteuerbar und zwischen dem ersten und dem zweiten Teilnehmersignalanschluss angeordnet ist. Mit dem zweiten Transistor kann der erste Teilnehmersignalanschluss mit dem zweiten Teilnehmersignalanschluss verbunden und/oder getrennt werden.

Die elektronische Schaltung kann weiterhin dazu ausgebildet sein, eine Versorgungsspannung für den Teilnehmer direkt aus dem am Signaleingang anliegenden vorbestimmten Signal zu gewinnen, so dass keine separate Hilfsenergie bereitgestellt werden muss.

Die elektronische Schaltung umfasst zweckmäßiger Weise einen dritten Transistor, mit dem der erste Teilnehmersignalanschluss auf das Bezugpotential schaltbar ist.

Der Logikbaustein der elektronischen Schaltung ist bevorzugt mit einer internen Funktionsüberwachung ausgestattet, wobei über den dritten Transistor eine Signalisierung eines Fehlerzustands erfolgen kann, indem das vorbestimmte Signal auf das Bezugspotential gezogen und somit nicht mehr zum Eingang der Auswerteeinheit übertragen wird.

Das oben genannte technische Problem wird ferner durch die Verfahrensschritte des Anspruchs 6 gelöst.

Demgemäß wird ein Verfahren zum Signalisieren von Systemzuständen mehrerer in Reihe geschaltete Teilnehmer eines Sicherheits-Kommunikationssystems zur Verfügung gestellt, welches folgende Schritte umfasst:
a) Generieren eines vorbestimmten periodischen Signals in der Auswerteeinheit, wobei das vorbestimmte Signal wenigstens einen ersten Signalabschnitt enthält, dessen Länge von der Anzahl der in Reihe geschalteten Teilnehmer abhängt;
b) Ausgeben des vorbestimmten Signals von der Auswerteeinheit an alle in Reihe geschalteten Teilnehmer des Sicherheits-Kommunikationssystems;
c) Modulieren des vorbestimmten Signals durch jeden der Teilnehmer in Abhängigkeit eines Ausgangssignals, welches von einem dem jeweiligen Teilnehmer zugeordneten Sensor bereitgestellt wird,
   wobei das vom jeweiligen Teilnehmer empfangene vorbestimmte Signal derart moduliert wird, dass jeder Teilnehmer den Zustand des vorbestimmten Signals an wenigstens einer ihm zugeordneten Stelle innerhalb des ersten Signalabschnitts verändert;
d) Empfangen und Auswerten des modulierten vorbestimmten Signals durch die Auswerteeinheit und Steuern einer Sicherheitsfunktion, wenn ein kritischer Systemzustand durch wenigstens einen Teilnehmer signalisiert wird.

Der erste Signalabschnitt des vorbestimmten periodischen Signals, der durch die in Reihe geschalteten Teilnehmer des Sicherheits-Kommunikationssystems an vorbestimmten Stellen für eine vorbestimmte Zeit moduliert werden kann, wird zweckmäßigerweise durch einen Spannungspegel mit Bezugspotential repräsentiert.

Jeder Teilnehmer kann in Abhängigkeit des Ausgangssignals, welches von einem dem Teilnehmer jeweilig zugeordneten Sensor bereitgestellt wird, in dem ersten Signalabschnitt an der wenigstens einen ihm zugeordneten Stelle einen positiven Spannungsimpuls einfügen oder nicht.

Das vorbestimmte periodische Signal umfasst einen zweiten Signalabschnitt, der durch einen positiven Spannungspegel repräsentiert wird. Eine steigende Signalflanke zu Beginn des zweiten Signalabschnitts kann zur Synchronisation des Sicherheits-Kommunikationssystems herangezogen werden, so dass die vorbestimmten Stellen und die vorbestimmten Zeiten im Signal-Zeitverlauf festgelegt werden, in denen die Teilnehmer den ersten Signalabschnitt zum signalisieren ihres Systemzustands modulieren können.

Die Länge des zweiten Signalabschnitts hängt von der Anzahl der in Reihe geschalteten Teilnehmer ab.

Die Erfindung ermöglicht es, die für jeden Teilnehmer benötigte Versorgungsspannung aus dem zweiten Signalabschnitt zu gewinnen. Dazu wird der positive Spannungspegel durch jeden der Teilnehmer an jeweils wenigstens einer vorbestimmten Stelle und für eine vorbestimmte Zeit ausgeblendet und verändert an den nachfolgenden Teilnehmer weitergeleitet, wobei der ausgeblendete Teil des ersten Signalabschnitts zum Bereitstellen einer Versorgungsspannung des jeweiligen Teilnehmers verwendet wird.

Zweckmäßiger Weise wird vor Ausführung des Schrittes a) eine Konfigurationsphase durchlaufen, in welcher die Anzahl der Teilnehmer innerhalb Sicherheits-Kommunikationssystems und ihre Position innerhalb des Sicherheits-Kommunikationssystems ermittelt wird.

Das erfindungsgemäße Sicherheits-Kommunikationssystem zeichnet sich gegenüber bekannten Sicherheitssystemen durch eine Lokalisierbarkeit aller in dem Sicherheits-Kommunikationssystem Teilnehmer aus, die einen kritischen Systemzustand signalisieren. Durch die automatische Ermittlung von Anzahl und Position der Teilnehmer ist ein solches Sicherheits-Kommunikationssystem besonders einfach erweiterbar.

Die Form und die Frequenz des vorbestimmten Signals weisen eine ausreichende Robustheit gegenüber Störeinstrahlungen auf, so dass Sicherheits-Kommunikationssysteme mit Leitungslängen von mehr als 1 km Länge möglich sind. Die Zykluszeiten der Signalübertragung sind für mehr als 20 Teilnehmer ausreichend kurz, um den Anforderungen der Sicherheitstechnik für Automatisierungsanlagen zu genügen.

Die Erfindung wird nachfolgend anhand einer beispielhaften Ausführungsform unter Bezugnahme der beigefügten Zeichnungen detailliert beschrieben. In den Zeichnungen zeigen:
- Fig. 1: einen Notausschaltkreis mit drei Notauseinheiten und einer Auswerteeinheit,
- Fig. 2: ein schematisches Schaltbild einer Notauseinheit mit einem an einer elektronischen Schaltung angekoppelten Notausschalter,
- Fig. 3: ein Signal-Zeitdiagramm des Notausschaltkreises während einer automatischen Konfigurationsphase,
- Fig. 4: ein Signal-Zeitdiagramm des Notausschaltkreises während einer Meldephase, d.h. während eines normalen Arbeitsbetriebs, bei dem zum Zeitpunkt (t1) zwei von drei Notausschalten aktiviert werden,
- Fig. 5: ein Signal-Zeitdiagramm des Notausschaltkreises während einer Statusabfrage bei zwei von drei aktivierten Notausschaltern.

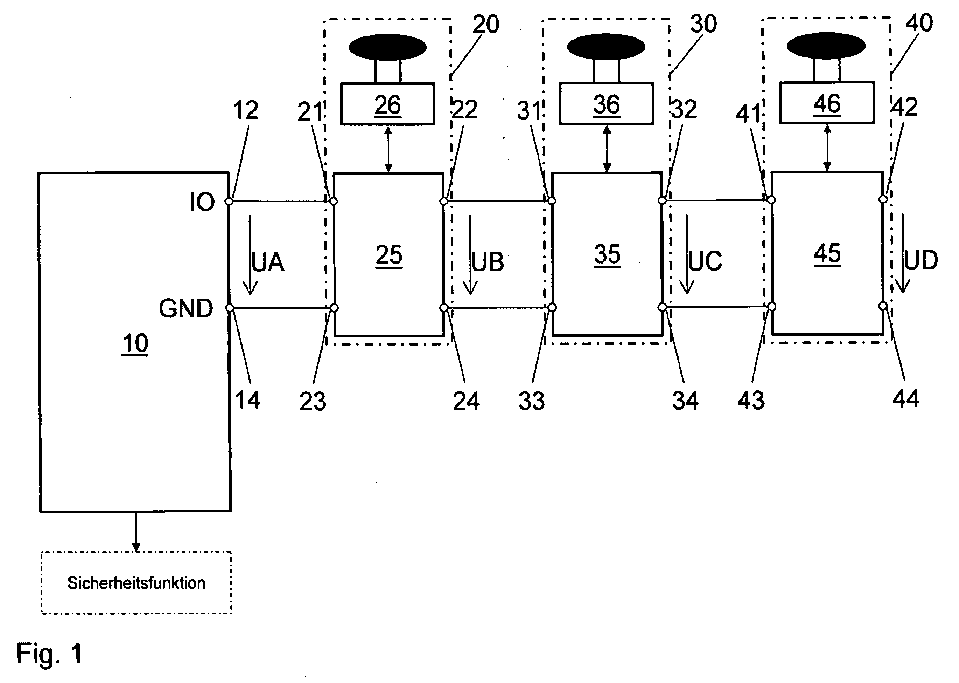

Das in der Figur 1 beispielhaft dargestellte Sicherheits-Kommunikationssystem kann ein Notausschaltkreis sein, der eine Auswerteeinheit 10 sowie beispielsweise drei in Reihe geschaltete Teilnehmer 20, 30 und 40 aufweisen, die zum Beispiel in einem Feld verteilt an einer weiträumigen Automatisierungsanlage angebracht sind. Die Teilnehmer 20, 30, 40 werden im Folgenden auch als Notauseinheiten bezeichnet, die als Sensor jeweils einen Notausschalter 26, 36, 46 aufweisen, mit denen eine Sicherheitsfunktion gleichberechtigt angefordert werden kann. Die in Reihe geschalteten Teilnehmer 20, 30, 40 bilden eine Teilnehmerkette.

Wie aus der Figur 1 ersichtlich ist, sind die Notausschalter 26, 36, 46 jeweils mit einer elektronischen Schaltung 25, 35, 45 verbunden, die für jeden Notausschalter eine sichere elektronische Ankopplung an den Notausschaltkreis bereitstellen.

Die Auswerteeinheit 10 weist einen Signalanschluss 12 und einen Masseanschluss 14 für ein Bezugpotential auf, an denen die drei Notauseinheiten 20, 30 und 40 in Form einer Teilnehmerkette hintereinander geschaltet angeschlossen sind.

Die Notauseinheiten sind jeweils über einen ersten Teilnehmersignalanschluss 21, 31, 41 und einen zweiten Teilnehmersignalanschluss 22, 32, 42 miteinander zu einer Teilnehmerkette verschaltet. Diese Anschlüsse werden von den elektronischen Schaltungen 25, 35, 45 bereitgestellt. Das Bezugspotential wird über die Masseanschlüsse 23, 24, 33, 34, 43 und 44 durch alle angeschlossenen Teilnehmer durchgeschleift.

Die Auswerteeinheit 10 kann nicht dargestellte weitere Signalausgänge und Signaleingänge aufweisen, an denen weitere nicht dargestellte Notauseinheiten jeweils in Reihe anschließbar sind, die zusätzliche parallele Teilnehmerketten bilden.

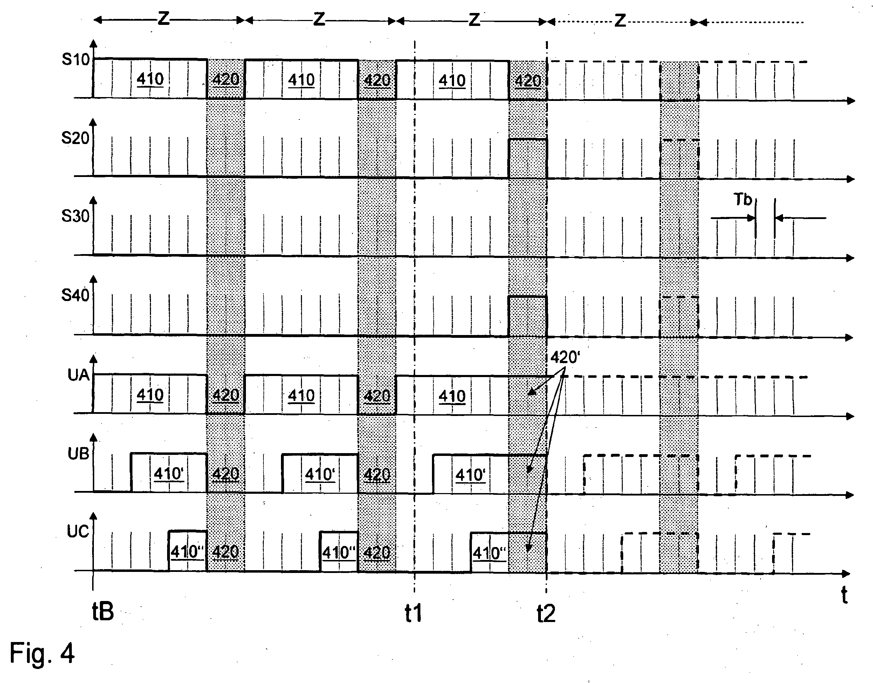

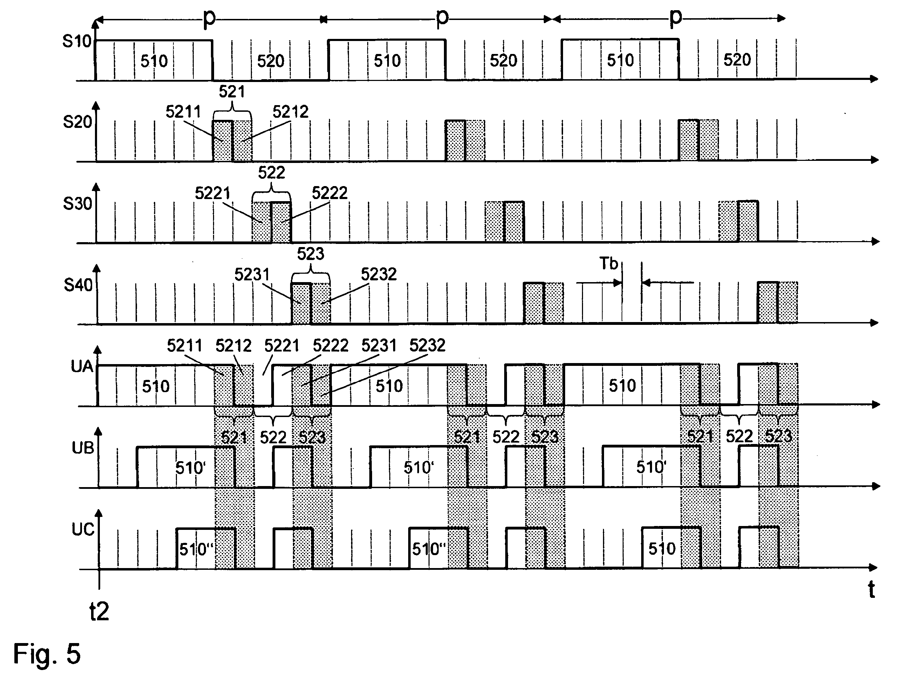

Damit die Notauseinheiten insbesondere die Betätigung des jeweiligen Notausschalters der Auswerteeinheit 10 signalisieren können, erzeugt die Auswerteeinheit 10 ein vorbestimmtes Signal S10 (siehe Fig. 4 und Fig. 5), das am Signalausgang 12 ausgegeben wird. Dieses Signal S10 kann im Wesentlichen als binäres Spannungssignal ausgebildet sein, das zwischen einem High und einem Low Pegel variiert wird, wobei der Low Pegel bevorzugt dem Bezugspotential GND an einem Masseanschluss 14 der Auswerteeinheit 10 entspricht.

Der Signalanschluss 12 und der Masseanschluss 14 stellen eine Zweidraht-Kommunikationsleitung für das dargestellte Sicherheits-Kommunikationssystem bereit, die durch die Teilnehmerkette mit den drei Notauseinheiten 20, 30 und 40 durchgeschleift wird.

Das Spannungssignal UA dient der bidirektionalen Übermittlung von Informationen zwischen den Notauseinheiten und der Auswerteeinheit und stellt vorteilhafter Weise gleichermaßen eine Versorgungsspannung für die elektronischen Schaltungen 25, 35, 45 und/oder für die Sensoren 26, 36, 46 bereit.

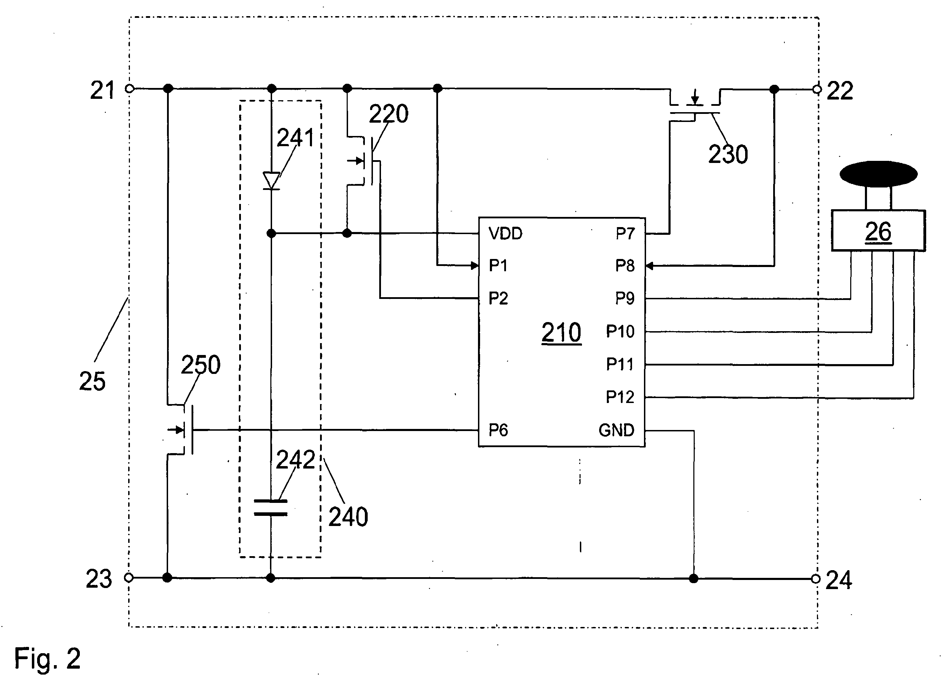

Die Schaltungen 25, 35, 45 der Notauseinheiten 20, 30, 40 des Notausschaltkreises sind identisch aufgebaut, so dass in der Figur 2 nur das Schaltbild der Notauseinheit 20 beispielhaft dargestellt ist. Das Schaltbild stellt insbesondere den Aufbau der Schaltung 25 detailliert dar.

Die Schaltung 25 umfasst einen ersten Teilnehmersignalanschluss 21 und einen zweiten Teilnehmersignalanschluss 22, die jeweils einen bidirektionalen Signalein- und Ausgang in der bzw. für die Teilnehmerkette des dargestellten Notausschaltkreises bereitstellen. Des Weiteren umfasst die Schaltung einen Logikbaustein 210, der bevorzugt durch einen Mikrokontroller oder alternativ durch einen FPGA, CPLD bzw. ein ASIC realisiert werden kann.

Der Notausschalter 26 ist über Ports P9 und P10 sowie Ports P11 und P12 zweikanalig an dem Logikbaustein 210 angeschlossen. Für eine solche zweikanalige und somit sichere Anbindung an die Schaltung sind alle auf dem Markt erhältlichen zweikanaligen Notausschalter grundsätzlich geeignet, d.h. es können prinzipiell sowohl Notausschalter mit zwei Öffnern oder zwei Schließern, als auch einem Öffner/Schließer-Paar für die Notauseinheit verwendet werden. Der entsprechend verwendete Schaltertyp muss lediglich durch Soft- oder Hardwaremittel an dem Logikbaustein 210 eingestellt werden. Alternativ können auch andere Sensortypen, wie Trittmatten, Temperatur- und Drucksensoren, Lichtschranken, Schutzgitter usw. an einer Notauseinheit angeschlossen werden. Des Weiteren können an einer Notauseinheit mehrere Sensoren über verschiedene Ports des Logikbausteins 210 angeschlossen werden.
Die Schaltung 25 umfasst einen ersten Transistor 220 sowie optional einen zweiten Transistor 230 und einen dritten Transistor 250, die mit ihrem jeweiligen Gateanschluss mit dem Logikbaustein 210 ansteuerbar verbunden sind.

Die elektronische Schaltung 25 verfügt des Weiteren über eine Versorgungseinrichtung 240, die in der Figur 2 beispielhaft einen Kondensator 242 sowie eine Diode 241 umfasst. Die Versorgungseinrichtung 240 stellt unter anderem die Betriebsspannung für den Logikbaustein 210 bereit. Die Diode 241 und der Kondensator 242 bilden eine Reihenschaltung die sich zwischen dem ersten Teilnehmersignalanschluss 21 und den beiden Masseanschlüssen 23, 24 erstreckt. Die Versorgungseinrichtung 240 kann zusätzliche ein in der Figur 2 nicht dargestelltes Schaltnetzteil und einen Spannungsregler umfassen, die unabhängig vom Ladezustand des Kondensators 242 eine definierte und stabile Spannung gewährleisten.

In einer alternativen, von der Erfindung nicht umfassten Ausführungsform kann aber auch eine zusätzliche Leitung die Versorgungsspannung zu den Notauseinheiten und diesen zugeordneten Notausschalter führen. Die Energieversorgung erfolgt in diesem Fall nicht über die Signalleitungen, so dass die Versorgungseinrichtung 240 mit der Diode 241 und dem Kondensator 242 zu Gunsten eines zusätzlichen Anschlusses entfallen können.

Der erste Transistor 220 ist zwischen dem Ausgangsknoten der Versorgungseinrichtung 240, d.h. dem gemeinsamen Knotenpunkt von Diode 241 und Kapazität 242, und dem ersten Teilnehmersignalanschluss 21 angeordnet, während der zweite Transistor 230 den ersten Teilnehmersignalanschluss 21 mit dem zweiten Teilnehmersignalanschluss 22 schaltbar verbindet. Der Logikbaustein 210 steuert die Transistoren 220 und 230 derart an, dass das Spannungssignal UA zwischen dem ersten Teilnehmersignalanschluss 21 und Masseanschluss, welches zunächst dem von der Auswerteeinheit erzeugten vorbestimmten Signal entspricht, moduliert und gleichzeitig an einen nachfolgenden Teilnehmer, d.h. der nachfolgenden Notauseinheit weitergeleitet werden kann. Mit dem ersten Transistor 220 kann an vorbestimmten Stellen des vorbestimmten Signals und für eine vorbestimmte Zeit ein Signalimpuls, d.h. ein positiver Spannungspegel über einen oder mehrere Zeittakte eingefügt werden. Die Spannung für den Signalimpuls wird über die Versorgungseinrichtung 240 bereitgestellt.

Mittels des dritten Transistors 250 kann das Spannungssignal UA am ersten Teilnehmersignalanschluss 21 auf das Bezugspotential des Masseanschluss 23 gezogen werden, wodurch allen weiteren Teilnehmern des Notausschaltkreises, d.h. der Auswerteeinheit 10 und den weiteren Notauseinheiten 30, 40 ein Fehlerzustand signalisiert werden kann.

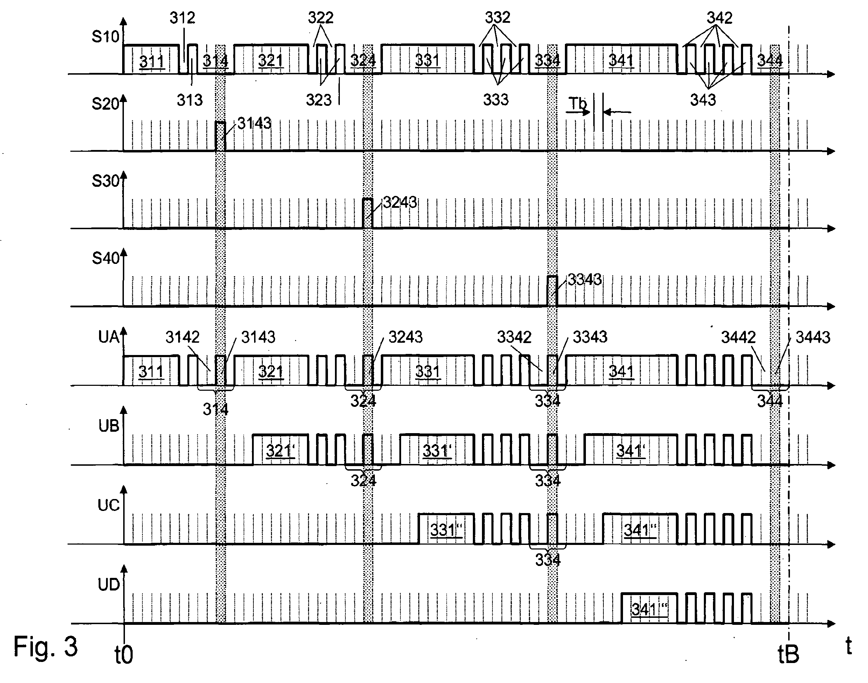

Die Funktion des Notausschaltkreises sowie der einzelnen in Reihe geschalteten Notauseinheiten wird im Folgenden unter Bezugnahme der in den Figuren 3 bis 5 dargestellten Signal-Zeitdiagramme für verschiedene Betriebszustände erläutert. An dieser Stelle sei ausdrücklich darauf hingewiesen, dass an dem in der Figur 1 dargestellten Notausschaltkreis nur beispielhaft drei Notauseinheiten 20, 30, 40 angeschlossen sind. Der Notausschaltkreis ist grundsätzlich für den Betrieb mit einer Vielzahl von Notauseinheiten geeignet, die entlang einer Strecke einer räumlich ausgedehnten Automatisierungsanlage verteilt und untereinander in Reihe geschaltet sind. Der Notausschaltkreis ermöglicht insbesondere eine einfache Erweiterbarkeit um zusätzliche Notauseinheiten, die zum Beispiel an die Notauseinheit 40 angehängt werden können. Die Sicherheitsfunktion des Notausschaltkreises ist ab einer angeschlossenen Notauseinheit gewährleistet.

Bei jeder Inbetriebnahme durchläuft der Notausschaltkreis zunächst eine Konfigurationsphase, in der die Anzahl der angeschlossenen Notauseinheiten 20, 30, 40 durch die Auswerteeinheit 10 ermittelt wird und die Notauseinheiten ihre Position in der Reihenschaltung ermitteln. Zu Beginn dieser Konfigurationsphase ist der zweite Transistor 230 einer jeweiligen Notauseinheit zunächst gesperrt, so dass die in Figur 3 gezeigten Konfigurationssignale an dem jeweiligen ersten Teilnehmersignalanschluss 21, 31, 41 der jeweiligen Notauseinheiten zunächst nicht zu deren zweiten Teilnehmersignalanschluss 22, 32, 42 weitergeleitet werden.

In der Figur 3 sind die zeitlichen Signalverläufe des während der Konfigurationsphase von der Auswerteeinheit 10 erzeugten vorbestimmten Signals S10 sowie die von den Notauseinheiten 20, 30, 40 Modulationssignale S20, S30, S40 dargestellt. Die Figur 3 zeigt zusätzlich die Spannungsverläufe UA, UB, UC, UD auf den Signalleitungen entlang der Teilnehmerkette, d.h. auf den Leitungen zwischen der Auswerteeinheit 10 und der Notauseinheit 20 sowie auf den Leitungen zwischen den jeweiligen Notauseinheiten 20, 30, 40. Das vorbestimmte Signal wird zum Beispiel durch einen Mikrokontroller in der Auswerteeinheit 10 erzeugt und folgt einer vorgegebenen Pulsfolge in Bezug auf einen Systemtakt Tb.

Zum Zeitpunkt t0 beginnt die Konfigurationsphase mit einem ersten Signalisierungszyklus, wobei zunächst ein erster Energieimpuls 311, d.h. einen High-Pegel, von der Auswerteeinheit 10 generiert und auf den Signalanschluss 12 ausgegeben wird, der über eine Dauer von sechs Takten Tb anliegen bleibt und im Wesentlichen zur Versorgung der Notauseinheiten dient. Das Signal S10 wird für einen Takt zurückgesetzt, so dass eine Signalpause 312, d.h. ein Low-Pegel auf den Energieimpuls 311 folgt. Im Anschluss wird ein Signalimpuls 313 über die Dauer eines Takts gesendet, auf den eine zweite Pause 314 von vier Takten folgt.

Mit Blick auf die Figur 2 wird deutlich, dass die erste Notauseinheit 20 durch den Energieimpuls 311 aufgeweckt wird. Das Spannungssignal UA, das bis zu dem Signalimpuls 313 mit dem von der Auswerteeinheit 10 generierten und ausgegebenen vorbestimmten Signal S10 entspricht, liegt zwischen dem ersten Teilnehmersignalanschluss 21 und dem Masseanschluss 23 der Notauseinheit 20 an. Es stellt über die Dauer der sechs Takte einen Ladestrom bereit, der in Flussrichtung durch die Diode 241 fließt. Der Kondensator 242 wird während dieser Zeit geladen und speichert somit insbesondere für die Signalpausen die elektrische Energie der Versorgungseinrichtung 240. Der Mikrocontroller 210 nimmt somit seinen Betrieb auf und erkennt über eine Signalerkennungseinrichtung am Port P1 folglich den einzelnen nachfolgenden Signalimpuls 313 vor der zweiten Pause 314.
Die Notauseinheit 20 registriert sich selbst als ersten Teilnehmer in der Reihenschaltung des Notausschaltkreises nach der Auswerteeinheit 10. Der Mikrocontroller 210 der ersten Notauseinheit 20 generiert daraufhin im Takt 3143 einen Signalimpuls eines Modulationssignals S20, der über den als Signaltreiber arbeitenden, ersten Transistor 220 auf den ersten Teilnehmersignalanschluss 21 ausgegeben wird.

Das in der Figur 3 dargestellte Spannungssignal UA zeigt den zeitlichen Verlauf des Signals, das am Signalanschluss 12 der Auswerteeinheit 10 und gleichzeitig am ersten Teilnehmersignaleingang 21 der ersten Notauseinheit 20 anliegt. Das Spannungssignal UA entspricht im Wesentlichen dem von der Auswerteeinheit generierten, vorbestimmten Signal S10 mit dem Unterschied, dass in dem Takt 3143 der Spannungsimpuls der ersten Notauseinheit 20 eingefügt ist.

Das Spannungssignal UA stellt somit ein moduliertes vorbestimmtes Signal dar.

Die Auswerteeinheit 10 ist dazu ausgebildet, während der Signalpause 314 im generierten und auf den Signalanschluss 12 ausgegebenen Signals S10, das modulierte vorbestimmte Spannungssignal UA zurück zu lesen.

Die Auswerteeinheit 10 erkennt an ihrem Signalanschluss 12 den Signalimpuls im Takt 3143 und schließt daraus, dass mindestens eine Notauseinheit in dem Notausschaltkreis angeschlossen ist.

Demzufolge wird von der Auswerteeinheit 10 während eines zweiten Signalzyklus ein zweiter Energieimpuls 321 über den Signalanschluss 12 ausgegeben, der acht Takte Tb lang ist. Auf den Energieimpuls 321 folgen zwei, jeweils durch einen Low-Pegel 322 abgetrennte Signalimpulse 323. Auf den zweiten Signalimpuls 323 folgt eine Pause 324, die wiederum einen vier Takte Tb langen Low-Pegel umfasst.

Die erste Notauseinheit 20 empfängt den Energieimpuls 321, der in einem Zeitraum von zwei Takten Tb im Wesentlichen zum Nachladen der Kapazität 242 dient. Anschließend wird der zweite Transistor 230 geöffnet, so dass der Signalverlauf über den zweiten Teilnehmersignalanschluss 22 an die nachfolgende Notauseinheit 30 weitergeleitet wird.

Die nachfolgende, d.h. die zweite Notauseinheit 30 wird durch den, von der ersten Notauseinheit 20 veränderten, um zwei Takte gekürzten Energieimpuls 321' aufgeweckt und empfängt die zwei aufeinanderfolgenden Signalimpulse 323 und die nachfolgende Pause 324.

Die Notauseinheit 30 registriert sich selbst als zweiten Teilnehmer in der Reihenschaltung des Notausschaltkreises und generiert daraufhin ein Modulationssignal S30, das ein Signalimpuls in die Pause 324 des vorbestimmten Signals S10 einfügt und als modulierte vorbestimmten Signale UB und UA über den ersten Teilnehmersignalanschluss 31 und über die erste Notauseinheit 20 an die Auswerteeinheit 10 übertragen wird.

Die Auswerteeinheit 10 und die erste Notauseinheit erkennen den Signalimpuls im Takt 3243 und schließen daraus, dass zumindest eine zweite Notauseinheit in dem Notausschaltkreis angeschlossen ist.
In einem dritten Signalzyklus der Konfigurationsphase wird von der Auswerteinheit 10 ein dritter Energieimpuls 331 erzeugt, auf den drei jeweils mit Pausen 332 getrennte Signalimpulse 333 und eine vier Takte Tb lange Signalpause 334 folgt. Der Energieimpuls umfasst in dem dargestellten Signal-Zeitdiagrammen einen 10 Takte Tb langen High-Pegel.

Das von der Auswerteeinheit 10 generierte vorbestimmte Signal S10, wird über die erste und zweite Notauseinheit 20, 30 an die dritte Notauseinheit 40 weitergeleitet, wobei die erste und zweite Notauseinheit nacheinander jeweils einen zwei Takte umfassenden Abschnitt des Energieimpulses 331 während der Signalweiterleitung ausblenden, um die Energie zum Nachladen ihrer Kapazitäten 242 zu gewinnen.

Am Teilnehmersignaleingang 41 der dritten Notauseinheit 40 liegt das Spannungssignal UC an, so dass die Notauseinheit 40 durch den veränderten, noch sechs Takte umfassenden Energieimpuls 331" aufgeweckt und aufgeladen wird. Der Mikrokontroller 210 empfängt nach dem Energieimpuls 331" drei Signalimpulse 333 und erkennt sich nach dem zweiten Low-Pegel des Taktes 3342 der Signalpause 334 als dritten Teilnehmer des Notausschaltreises. Die dritte Notauseinheit 40 generiert ein drittes Modulationssignal S40, dass über den ersten Teilnehmersignaleingang 41 ausgegeben wird und als Signalimpuls im Takt 3343 in den Signalspannungen UA, UB, UD dargestellt ist.

Die Auswerteeinheit 10 liest das Spannungssignal UA, das dem modulierten vorbestimmten Signal entspricht, zurück und erkennt an dem Signalimpuls im Takte 3343, dass wenigstens drei Notauseinheiten 20, 30, 40 an dem Notausschaltkreis angeschlossen sind. Ebenso erkennt die erste und die zweite Notauseinheit 20, 30, dass der Notausschaltkreis wenigstens eine weitere Notauseinheit umfasst.

In einem vierten und beispielhaft letzten Signalzyklus der in Figur 3 dargestellten Konfigurationsphase wird wiederum ein Energieimpuls 341 generiert, auf den vier Signalimpulse 343 folgen. Das generierte vorbestimmte Signal wird, wie zuvor bereits beschrieben über die ersten und zweiten Notauseinheit 20, 30 zur dritten Notauseinheit 40 geleitet. Die dritte Notauseinheit 40 erkennt an ihrem ersten Teilnehmersignalanschluss 41 den veränderten Energieimpuls 341" und öffnet nach dem Nachladen der Kapazität 242 den zweiten Transistor 230 und leitet das veränderte Spannungssignal UD an den zweiten Teilnehmersignalanschluss 42 weiter.

An dem zweiten Teilnehmersignalanschluss 42 ist in dem vorliegenden Beispiel keine weitere Notauseinheit angeschlossen. Somit kann auch nach dem Letzten der vier Signalimpulse 343 kein Signalimpuls eines Modulationssignals von einer nachfolgenden Notauseinheit in die Signalpause 344 des vorbestimmten Signals eingefügt werden.

Die Auswerteeinheit 10 sowie die drei Notauseinheiten 20, 30, 40 erkennen an dem in diesem Fall nicht modulierten Spannungssignal UA, UB, UC, UC, dass keine weitere Notauseinheit vorhanden ist.

Die Konfigurationsphase ist in dem in der Figur 3 gezeigten Beispiel mit dem Zeitpunkt tB, d.h. nach dem Ausgeben und Zurücklesen der Pause 344 am Ende des vorbestimmten Signals S10 bzw. des modulierten vorbestimmten Signals UA abgeschlossen.

Schlägt die Konfiguration des Notausschaltkreises durch den Einfluss elektromagnetischer Störungen fehl, so kann die Konfigurationsphase auch mehrmals durchlaufen werden bis eine stabile Kommunikation etabliert ist.

Alternativ könnte an den Teilnehmern, d.h. im vorliegenden Beispiel den Notauseinheiten, deren jeweilige Position in einer Teilnehmerkette manuell eingestellt werden, die zum Beispiel durch DIP-Schalter codiert oder in einem nicht flüchtigen Speicher abgelegt werden. In gleicher Weise kann die Anzahl der vorhandenen Notauseinheiten an oder in der Auswerteeinheit 10 eingestellt bzw. gespeichert werden. Die Konfigurationsphase nach der Inbetriebnahme des Notausschaltkreises wird in diesem Fall durch eine Initialisierungsphase ersetzt, während der die Teilnehmer gleichzeitig mit Energie versorgt werden. Hierzu wird zum Beispiel ein langer Energieimpuls bereitgestellt. Bevorzugt kann nach einer ersten Inbetriebnahme eine Konfigurationsphase manuell ausgelöst werden, nach der die Konfigurationsdaten des Notausschaltkreises in den nicht flüchtigen Speichern der Teilnehmer abgelegt wird, so dass nach jeder weiteren Inbetriebnahme nur noch die Initialisierungsphase durchlaufen werden muss.

Figur 4 stellt eine Meldephase dar, die sich beispielsweise zum Zeitpunkt tB direkt an die erfolgreich durchgeführte Konfigurationsphase anschließen könnte und einen normalen Arbeitsbetrieb des Notausschaltkreises bis zur Erkennung wenigstens eines betätigten Notausschalters darstellt.

Nach dem Beenden der Konfigurationsphase generiert die Auswerteeinheit 10 ein beispielhaftes zyklisches, vorbestimmtes Signal S10, das als ein durch die Notauseinheiten modulierbares Spannungssignal UA über den Signalausgang 12 an die erste Notauseinheit 20 ausgegeben wird. Der zeitliche Zusammenhang zwischen dem generierten vorbestimmten Signal S10 und dem modulierbaren bzw. dem modulierten ausgegebenen Signal UA ist in der Figur 4 verdeutlicht. Das ausgegebene Signal UA enthält in jedem Zyklus z einen Startimpuls 410, dessen Läge von der Anzahl der angeschlossen bzw. erkannten Notauseinheiten abhängt und in dem vorliegenden Beispiel eine Breite von sechs Takten Tb aufweist. Auf den Startimpuls 410 (High-Pegel) folgt eine Pause bzw. ein Low-Pegel 420 mit beispielsweise zwei Takten Tb. Der Startimpuls 410 stellt für jede Notauseinheit 20, 30, 40 einen zwei Takte Tb Breiten High-Pegel bereit, aus dem die Energie zum Nachladen der Kapazität 242 in der Versorgungseinrichtung 240 gewonnen werden kann.

Die Notauseinheit 20 empfängt in jedem Zyklus z das Signal UA und leitet dieses nach der Nachladezeit von zwei Takten Tb, d.h. um zwei ausgeblendete Takte verändert, als Signal UB mit dem geänderten Startimpuls 410' an die nachfolgende Notauseinheit 30 weiter. Die zweite Notauseinheit 30 blendet in dem empfangenen Signal UB in gleicher Weise zwei Takte zum Nachladen der Kapazität 242 aus und überträgt in jedem Zyklus z das wiederum geänderte Signal UC mit dem geänderten Startimpuls 410" an die dritte Notauseinheit 40.

In der Figur 4 sind beispielhaft zwei aufeinanderfolgende normale Arbeitszyklen dargestellt, während dem keiner der Notausschalter 26, 36, 46 betätigt worden ist.

Zum Zeitpunkt t1 werden in dem dargestellten Beispiel die Notausschalter 26 und 46 der zweiten und dritten Nötauseinheit 20, 40 betätigt. Die Notauseinheiten 20, 40 generieren daraufhin jeweils ein Modulationssignal S20 und S40, die sich im modulierten vorbestimmten Signal UA als High-Pegel 420' wiederfinden, die zeitlich in die Pause 420 des von der Auswerteeinheit 10 bereitgestellten vorbestimmten Signals S10 eingefügt werden. Das modulierte vorbestimmte Signal UA signalisiert der Auswerteeinheit 10, dass zumindest ein Notausschalter in dem Notausschaltkreis betätigt worden ist.

Zu dem Zeitpunkt t2 kann die Meldephase beendet werden, so dass der Notausschaltkreis in eine Signalisierungsphase eintreten kann, die beispielhaft in der Figur 5 dargestellt ist. Die Auswerteeinheit kann schon jetzt die Sicherheitsfunktion aktivieren.

Die Signalisierungsphase dient der Lokalisierung des bzw. der Notausschalter, die im Notausschaltkreis betätigt worden sind.

Die Auswerteeinheit 10 generiert zu diesem Zweck wiederum ein zyklisches, d.h. periodisches vorbestimmtes Signal S10 der Periode p, das als ein durch die Notauseinheiten modulierbares Spannungssignal UA über den Signalausgang 12 an die erste Notauseinheit 20 ausgegeben wird. Dieses Signal umfasst einen charakteristischen Startimpuls, der sich vorzugsweise von dem Startimpuls der Meldephase z.B. in der Breite oder durch eine vorangestellte Impulsfolge unterscheiden kann.

In der Figur 5 ist dieser Startimpuls 510 beispielhaft als sechs Takte umfassender High-Pegel dargestellt, der wie bereits bezüglich der Meldephase beschrieben, die Energieversorgung der Notauseinheiten und ihre Synchronisierung gewährleistet.

Auf den Startimpuls 510 des von der Auswerteeinheit 10 generierten vorbestimmten Signals S10 folgt eine Pause bzw. ein Low-Pegel 520, dessen Breite von der Anzahl der angeschlossenen bzw. erkannten Notauseinheiten abhängt.

Der Low-Pegels des von der Auswerteeinheit 10 über den Signalausgang 12 ausgegebenen Signals UA können die Notauseinheiten 20, 30, 40 durch eine gezielte Modulation des Signals UA ihren jeweiligen Systemzustand übertragen.

In dem in der Figur 5 dargestellten Beispiel sind in einem sechs Takte Tb umfassenden Low-Pegel-Bereich 520 im Signal UA jeder Notauseinheit ein Signalisierungsbereich 521, 522, 523 zur Signalisierung des Systemzustand zugeordnet, wobei jeder Signalisierungsbereich zwei und aufeinanderfolgende Takte 5211 und 5212, 5221 und 5222 sowie 5231 und 5232 umfasst.

Die Takte 5211 und 5212 sind zum Beispiel der ersten Notauseinheit 20 zugeordnet, die Takte 5221 und 5222 sind der zweiten Notauseinheit 30 zugeordnet und die Takte 5231 und 5232 sind der dritten Notauseinheit 40 zugewiesen.

Der Zustand, ob ein Notausschalter einer Notauseinheit betätigt wurde oder nicht wird durch eine festgelegte High-Low-Pegel Signalfolge codiert. In dem dargestellten Beispiel signalisiert ein High-Low-Signal einen betätigten Notausschalter, während ein Low-High-Signal einen nicht betätigten Notausschalter darstellt.

Wie aus den Signalverläufen zu entnehmen ist, codieren die Signale S20 und S40 jeweils einen betätigten Notausschalter. Das Signal S30 repräsentiert einen nicht betätigten Notausschalter. Die Signale werden von den Notauseinheiten an den vorbestimmten Stellen in dem modulierbaren vorbestimmten Signal UA eingefügt.

Beim Zurücklesen des Signals UA während der Signalpause 520 des generierten vorbestimmen Signals erkennt die Auswerteeinheit 10, dass in dem dargestellten Beispiel die erste und die dritte Notauseinheit einen betätigten Notausschalter signalisiert.

Treten Fehler beispielsweise durch Kurzschlüsse oder durch Leitungsunterbrechungen in dem Notausschaltkreis auf, so empfängt die Auswerteeinheit 10 an ihrem Signaleingang 12 zumindest kein vollständiges Signal UD. Unter Ansprechen auf ein unvollständig empfangenes Signal UD kann die Auswerteeinheit 10 ebenfalls eine sicherheitsbasierte Funktion auslösen und einen Fehler signalisieren.
Die Mikrocontroller 210 der Notauseinheiten 20, 30, 40 können zusätzlich eine interne Fehlfunktion, zum Beispiel einen ausgefallenen Kanal eines zweikanalig angeschlossenen Notausschalters, selbständig feststellen. Ein solcher Fehler kann von einer Notauseinheit, beispielsweise der Notauseinheit 20, der Auswerteeinheit 10 dadurch signalisiert werden, dass der Transistor 250 der elektronischen Schaltung 25 den Signaleingang 21 mit dem Masseanschluss 23 kurzschließt. Die Auswerteeinheit 10 empfängt somit ein unvollständiges Signal UD und schließt aus dem übertragenen Kurzschlusssignal auf ein fehlerhaftes Signal UD und kann darauf hin eine sicherheitsgerichtete Funktion und/oder ein Fehlersignal auslösen. Zur Kontrolle eines modulierten Signals kann am Signalausgang 22, 32, 42 einer Notauseinheit 20, 30, 40 eine zweite Signalerkennungseinrichtung vorgesehen sein.

## Patentansprüche

1. Sicherheits-Kommunikationssystem zum Bereitstellen einer Sicherheitsfunktion umfassend:
eine Auswerteeinheit (10), an welche eine Anzahl von in Reihe geschalteten Teilnehmern (20, 30, 40) angeschlossen ist, wobei
die Auswerteeinheit (10) einen einzigen Signalanschluss (12), einen Masseanschluss für ein Bezugspotential (14), eine Einrichtung zum Bereitstellen eines vorbestimmten Signals für die Teilnehmer aufweist, wobei
die Teilnehmer (20, 30, 40) jeweils einen ersten Teilnehmersignalanschluss (21, 31, 41), einen zweiten Teilnehmersignalanschluss (22, 32, 42), wenigstens einen Masseanschluss (23, 33, 43; 24, 34, 44) für ein Bezugspotential, einen Sensor (26, 36, 46) sowie eine elektronische Schaltung (25, 35, 45) aufweisen, wobei jede elektronische Schaltung (25, 35, 45) zum Modulieren des vorbestimmten Signals ausgebildet ist,
um einen kritischen oder unkritischen Systemzustand zu signalisieren, welcher durch ein Sensorsignal des jeweiligen Sensors dargestellt wird, wobei das vorbestimmte Signal derart moduliert wird, dass der Zustand des vorbestimmten Signals in einem ersten Signalabschnitt des vorbestimmten Signals an wenigstens einer ihm zugeordneten Stelle verändert wird,
und dass an wenigstens einer zugeordneten Stelle eines zweiten Signalabschnitts (510) des vorbestimmten Signals, der durch einen positiven Spannungspegel repräsentiert wird, dessen Länge von der Anzahl der in Reihe geschalteten Teilnehmer (20, 30, 40)abhängt, der positive Spannungspegel ausgeblendet und verändert an den nachfolgenden Teilnehmer (30, 40) weitergeleitet wird, wobei der ausgeblendete Teil des zweiten Signalabschnitts (510) zum Bereitstellen einer Versorgungsspannung des jeweiligen Teilnehmers verwendet wird, und wobei
die Auswerteeinheit zum Empfangen des modulierten vorbestimmten Signals am Signalanschluss (12), zum Auswerten des modulierten vorbestimmten Signals und zum Steuern einer Sicherheitsfunktion unter Ansprechen auf das Auswerteergebnis ausgebildet ist.

2. Sicherheits-Kommunikationssystem gemäß Anspruch 1, **dadurch gekennzeichnet, dass** die Auswerteeinheit (10) unter Ansprechen auf das empfangene modulierte vorbestimmte Signal den Teilnehmer oder diejenigen Teilnehmer lokalisieren kann, welche einen kritischen Systemzustand signalisiert haben.

3. Sicherheits-Kommunikationssystem nach einem der Ansprüche 1 oder 2, **dadurch gekennzeichnet, dass** die elektronische Schaltung (25, 35, 45) jedes Teilnehmers (20, 30, 40) einen Logikbaustein (210) und wenigstens einen ersten Transistor (220) umfasst, wobei der erste Transistor (220) durch den Logikbaustein (210) ansteuerbar ist und zwischen dem ersten Teilnehmersignalanschluss (21) und einem Energiespeicher (242) des Teilnehmers (20, 30, 40) angeordnet sowie dazu ausgebildet ist, das am ersten Teilnehmersignalanschluss (21) anliegende vorbestimmte Signal zu modulieren.

4. Sicherheits-Kommunikationssystem nach einem der Ansprüche 1 bis 3, **dadurch gekennzeichnet, dass** die elektronische Schaltung (25, 35, 45) einen zweiten Transistor (230) umfasst, wobei der zweite Transistor (230) durch den Logikbaustein (210) ansteuerbar ist und zwischen dem ersten und dem zweiten Teilnehmersignalanschluss (21, 22) angeordnet sowie dazu ausgebildet ist, den ersten Teilnehmersignalanschluss (21) mit dem zweiten Teilnehmersignalanschluss (22) zu verbinden und/oder zu trennen.

5. Sicherheits-Kommunikationssystem nach einem der Ansprüche 1 bis 3, **dadurch gekennzeichnet, dass** die elektronische Schaltung (25, 35, 45) derart ausgebildet ist, dass sie aus dem am ersten Teilnehmersignalanschluss (21, 31, 41) anliegenden Signal eine Versorgungsspannung gewinnen kann.

6. Verfahren zum Signalisieren wenigstens eines Systemzustands eines Sicherheits-Kommunikationssystems gemäß einem der vorstehenden Ansprüche, umfassend folgende Schritte:
a) Generieren eines vorbestimmten periodischen Signals (S10) in der Auswerteeinheit (10), wobei das vorbestimmte Signal wenigstens einen ersten Signalabschnitt (520) enthält, dessen Länge von der Anzahl der in Reihe geschalteten Teilnehmer abhängt, und wobei das vorbestimmte periodische Signal einen zweiten Signalabschnitt umfasst, der durch einen positiven Spannungspegel repräsentiert wird, dessen Länge von der Anzahl der in Reihe geschalteten Teilnehmer (20, 30, 40) abhängt;
b) Ausgeben des vorbestimmten Signals (S10) von der Auswerteeinheit (10) an alle in Reihe geschalteten Teilnehmer (20, 30, 40) des Sicherheits-Kommunikationssystems;
c) Modulieren des vorbestimmten Signals durch jeden der Teilnehmer (20, 30, 40) in Abhängigkeit eines Ausgangssignals, welches von einem dem jeweiligen Teilnehmer zugeordneten Sensor (26, 36, 46) bereitgestellt wird,
wobei das vom jeweiligen Teilnehmer empfangene vorbestimmte Signal derart moduliert wird, dass jeder Teilnehmer den Zustand des vorbestimmten Signals an wenigstens einer ihm zugeordneten Stelle innerhalb des ersten Signalabschnitts (520) verändert, und dass der positive Spannungspegel des zweiten Signalabschnitts (510) durch jeden der Teilnehmer (20, 30, 40) an wenigstens einer ihm zugeordneten Stelle ausgeblendet und verändert an den nachfolgenden Teilnehmer (30, 40) weitergeleitet wird, wobei der ausgeblendete Teil des zweiten Signalabschnitts (510) zum Bereitstellen einer Versorgungsspannung des jeweiligen Teilnehmers verwendet wird;
d) Empfangen und Auswerten des modulierten vorbestimmten Signals (UA) durch die Auswerteeinheit (10) und Steuern einer Sicherheitsfunktion, wenn ein kritischer Systemzustand durch wenigstens einen Teilnehmer (20, 30, 40) signalisiert wird.

7. Verfahren nach Anspruch 6, **dadurch gekennzeichnet, dass** der erste Signalabschnitt durch einen Spannungspegel mit Bezugspotential repräsentiert wird.

8. Verfahren nach Anspruch 7, **dadurch gekennzeichnet, dass** jeder Teilnehmer, in Abhängigkeit des Ausgangssignals, welches von einem, eines jeweiligen Teilnehmers zugeordneten Sensor (26, 36, 46) bereitgestellt wird, in dem ersten Signalabschnitt (520) an der wenigstens einen ihm zugeordneten Stelle einen positiven Spannungsimpuls einfügt.

9. Verfahren gemäß einem der Ansprüche 6 bis 8, **dadurch gekennzeichnet, dass** vor dem Schritt a) eine Konfigurationsphase durchlaufen wird, in welcher die Anzahl der Teilnehmer (20, 30, 40) innerhalb des Sicherheits-Kommunikationssystems und die ihre Position innerhalb des Sicherheits-Kommunikationssystems ermittelt wird.

## Claims

1. A safety communication system for providing a safety function, comprising:
an evaluation unit (10) to which a number of series-connected subscribers (20, 30, 40) are connected;
the evaluation unit (10) comprising a single signal terminal (12), a ground terminal for a reference potential (14), means for providing a predetermined signal for the subscribers;
the subscribers (20, 30, 40) each comprising a first subscriber signal terminal (21, 31, 41), a second subscriber signal terminal (22, 32, 42), at least one ground terminal (23, 33, 43; 24, 34, 44) for a reference potential, a sensor (26, 36, 46), and an electronic circuit (25, 35, 45);
wherein each electronic circuit (25, 35, 45) is adapted to modulate the predetermined signal so as to signal a critical or non-critical system state which is represented by a sensor signal of the respective sensor;
wherein the predetermined signal is modulated such that the state of the predetermined signal is altered in a first signal portion of the predetermined signal in at least one position assigned thereto, and that in at least one assigned position of a second signal portion (510) of the predetermined signal, which is represented by a positive voltage level and which has a length depending on the number of series-connected subscribers (20, 30, 40), the positive voltage level is masked out and forwarded in altered form to the subsequent subscriber (30, 40), wherein the masked-out part of the second signal portion (510) is used to provide a supply voltage for the respective subscriber; and
wherein the evaluation unit is adapted to receive the modulated predetermined signal at the signal terminal (12) for evaluating the modulated predetermined signal and for controlling a safety function in response to the evaluation result.

2. The safety communication system according to claim 1, **characterised in that** the evaluation unit (10) is able to locate in response to the received modulated predetermined signal said subscriber or those subscribers which has/have signalled a critical system state.

3. The safety communication system according to any of claims 1 or 2, **characterised in that** the electronic circuit (25, 35, 45) of each subscriber (20, 30, 40) comprises a logic component (210) and at least a first transistor (220), wherein the first transistor (220) is controllable by the logic component (210) and is arranged between the first subscriber signal terminal (21) and an energy storage (242) of the subscriber (20, 30, 40) and is adapted to modulate the predetermined signal applied to the first subscriber signal terminal (21).

4. The safety communication system according to any of claims 1 to 3, **characterised in that** the electronic circuit (25, 35, 45) comprises a second transistor (230), wherein the second transistor (230) is controllable by the logic component (210) and is arranged between the first and second subscriber signal terminals (21, 22) and is adapted to connect and/or disconnect the first subscriber signal terminal (21) to and/or from the second subscriber signal terminal (22).

5. The safety communication system according to any of claims 1 to 3, **characterised in that** the electronic circuit (25, 35, 45) is adapted such as to be capable to yield a supply voltage from the signal applied to the first subscriber signal terminal (21, 31, 41).

6. A method for signalling at least one system state of a safety communication system according to any of the preceding claims, comprising the steps of:
a) generating a predetermined periodic signal (S10) in the evaluation unit (10), the predetermined signal including at least a first signal portion (520) having a length that depends on the number of series-connected subscribers, and the predetermined periodic signal including a second signal portion that is represented by a positive voltage level, the length of which depends on the number of series-connected subscribers (20, 30, 40);
b) transmitting the predetermined signal (S10) from the evaluation unit (10) to all series-connected subscribers (20, 30, 40) of the safety communication system;
c) modulating, by each of the subscribers (20, 30, 40), the predetermined signal in response to an output signal provided by a sensor associated with each respective subscriber (26, 36, 46);
wherein the predetermined signal received by the respective subscriber is modulated in such a way that each subscriber alters the state of the predetermined signal in at least one position within the first signal portion (520) it has been assigned to, and that each of the subscribers (20, 30, 40) masks out the positive voltage level of the second signal portion (510) in at least one position it has been assigned to and forwards it to the subsequent subscriber (30, 40), wherein the masked-out part of the second signal portion (510) is used for providing a supply voltage for the respective subscriber;
d) receiving and evaluating the modulated predetermined signal (UA) by the evaluation unit (10) and controlling a safety function when a critical system state is signalled by at least one subscriber (20, 30, 40).

7. The method according to claim 6, **characterised in that** the first signal portion is represented by a voltage level at reference potential.

8. The method according to claim 7, **characterised in that** each subscriber inserts a positive voltage pulse in the first signal portion (520) in the at least one position it has been assigned to in response to the output signal provided by a sensor (26, 36, 46) associated with the respective subscriber.

9. The method according to any of claims 6 to 8, **characterised in that** prior to step a) a configuration phase is executed, in which the number of subscribers (20, 30, 40) within the safety communication system and their position within the safety communication system is determined.

## Revendications

1. Système de communication sécurisé pour la réalisation d'une fonction de sécurité, comprenant :
une unité d'évaluation (10), à laquelle est reliée une pluralité d'abonnés (20, 30, 40) connectés en série, où l'unité d'évaluation (10) présente une seule connexion de signal (12), une connexion de masse pour un potentiel de référence (14), un dispositif de préparation d'un signal défini pour les abonnés, où les abonnés (20, 30, 40) présentent chacun une première connexion de signal d'abonné (21, 31, 41), une deuxième connexion de signal d'abonné (22, 32, 42), au moins une connexion de masse (23, 33, 43 ; 24, 34, 44) pour un potentiel de référence, un capteur (26, 36, 46) ainsi qu'un circuit électronique (25, 35, 45), où chaque circuit électronique (25, 35, 45) est prévu pour la modulation du signal défini, pour signaler un état de système critique ou non critique représenté par un signal de capteur émis par le capteur correspondant, où le signal défini est modulé de telle manière que l'état du signal défini dans un premier segment de signal du signal défini est modifié sur au moins un emplacement qui lui est associé, et que sur au moins un emplacement associé d'un deuxième segment de signal (510) du signal défini, lequel est représenté par un niveau de tension positif dont la longueur est fonction du nombre des abonnés (20, 30, 40) connectés en série, le niveau de tension positif est transmis masqué et modifié à l'abonné (30, 40) suivant, où la partie masquée du deuxième segment de signal (510) est utilisée pour la préparation d'une tension d'alimentation de l'abonné respectif, et où l'unité d'évaluation est prévue pour la réception du signal défini modulé sur la connexion de signal (12), pour l'évaluation du signal défini modulé et pour la commande d'une fonction de sécurité en réaction au résultat d'évaluation.

2. Système de communication sécurisé selon la revendication 1, **caractérisé en ce que** l'unité d'évaluation (10) peut, en réaction au signal défini modulé reçu, localiser l'abonné ou les abonnés ayant signalé un état de système critique.

3. Système de communication sécurisé selon la revendication 1 ou 2, **caractérisé en ce que** le circuit électronique (25, 35, 45) de chaque abonné (20, 30, 40) comprend un composant logique (210) et au moins un premier transistor (220), le premier transistor (220) pouvant être commandé par le composant logique (210) et étant disposé entre la première connexion de signal d'abonné (21) et un accumulateur d'énergie (242) de l'abonné (20, 30, 40), et étant prévu pour moduler le signal défini appliqué sur la première connexion de signal d'abonné (21).

4. Système de communication sécurisé selon l'une des revendications 1 à 3, **caractérisé en ce que** le circuit électronique (25, 35, 45) comprend un deuxième transistor (230), le deuxième transistor (230) pouvant être commandé par le composant logique (210) et étant disposé entre la première et la deuxième connexion de signal d'abonné (21, 22), et étant prévu pour relier la première connexion de signal d'abonné (21) à la deuxième connexion de signal d'abonné (22) et/ou pour la séparer de celle-ci.

5. Système de communication sécurisé selon l'une des revendications 1 à 3, **caractérisé en ce que** le circuit électronique (25, 35, 45) est prévu de manière à pouvoir acquérir une tension d'alimentation à partir du signal appliqué sur la première connexion de signal d'abonné (21, 31, 41).

6. Procédé de signalement d'au moins un état d'un système de communication sécurisé selon l'une des revendications précédentes, comprenant les étapes suivantes :
a) génération d'un signal périodique défini (S10) dans l'unité d'évaluation (10), ledit signal défini comprenant au moins un premier segment de signal (520) dont la longueur est fonction du nombre des abonnés connectés en série, et ledit signal défini comprenant un deuxième segment de signal représenté par un niveau de tension positif dont la longueur est fonction du nombre des abonnés (20, 30, 40) connectés en série ;
b) émission du signal défini (S10) par l'unité d'évaluation (10) vers tous les abonnés (20, 30, 40) connectés en série du système de communication sécurisé ;
c) modulation du signal défini par chacun des abonnés (20, 30, 40) en fonction d'un signal de sortie préparé par un capteur (26, 36, 46) associé à l'abonné correspondant, le signal défini reçu par l'abonné respectif étant modulé de telle manière que chaque abonné modifie l'état du signal défini sur au moins un emplacement qui lui est associé à l'intérieur du premier segment de signal (520), et que le niveau de tension positif du deuxième segment de signal (510) est transmis, par chacun des abonnés (20, 30, 40), masqué et modifié à l'abonné (30, 40) suivant sur au moins un emplacement qui lui est associé, la partie masquée du deuxième segment de signal (510) étant utilisée pour la préparation d'une tension d'alimentation de l'abonné respectif ;
d) réception et évaluation du signal défini modulé (UA) par l'unité d'évaluation (10) et commande d'une fonction de sécurité si un état de système critique est signalé par au moins un abonné (20, 30, 40).

7. Procédé selon la revendication 6, **caractérisé en ce que** le premier segment de signal est représenté par un niveau de tension à potentiel de référence.

8. Procédé selon la revendication 7, **caractérisé en ce que** chaque abonné, en fonction du signal de sortie délivré par un capteur (26, 36, 46) associé à un abonné correspondant, insère une impulsion de tension positive dans le premier segment de signal (520) sur ledit au moins un emplacement qui lui est associé.

9. Procédé selon l'une des revendications 6 à 8, **caractérisé en ce qu'**une phase de configuration est exécutée préalablement à l'étape a), où le nombre des abonnés (20, 30, 40) à l'intérieur du système de communication sécurisé et leur position à l'intérieur du système de communication sécurisé sont déterminés.
